# EUROPÄISCHE PATENTSCHRIFT

(11) **EP 3 138 791 B1**
(45) Veröffentlichungstag und Bekanntmachung des Hinweises auf die Patenterteilung: **06.05.2020**
(21) Anmeldenummer: 16185164.7
(22) Anmeldetag: 22.08.2016
(51) Int. Cl.: B65G 23/08, G01D 5/14

(54) **TROMMELMOTOR UND SENSORKARTUSCHE FÜR EINEN TROMMELMOTOR**
DRUM MOTOR AND SENSOR CARTRIDGE FOR A DRUM MOTOR
MOTEUR A TAMBOUR ET CARTOUCHE DE CAPTEUR POUR UN MOTEUR A TAMBOUR

(30) Priorität: 24.08.2015 DE 102015114030
(43) Veröffentlichungstag der Anmeldung: 08.03.2017
(73) Patentinhaber: Interroll Holding AG, 6592 Sant' Antonino (CH)
(72) Erfinder: DUDEK, Siegmund, 52525 Heinsberg (DE)
(74) Vertreter: Eisenführ Speiser

(56) Entgegenhaltungen:
- WO-A1-99/00317
- DE-A1-102011 005 807
- DE-U1-202013 004 752
- US-A1- 2007 278 868
- US-B1- 6 710 505

## Beschreibung

Die vorliegende Erfindung betrifft einen Trommelmotor mit einem Trommelrohr, welches sich entlang einer Längsachse erstreckt, einer im Trommelrohr angeordneten elektrischen Antriebseinheit mit einem Stator und einer Rotorwelle, und mit einer Winkelmesseinheit, die derart im Trommelrohr angeordnet ist, dass sie einen Drehwinkel zwischen dem Stator und der Rotorwelle erfassen kann. Unter einem Trommelrohr wird typischerweise ein Trommelmotormantel verstanden. Die Winkelmesseinheit wird typischerweise für eine Regelung des Trommelmotors genutzt.

Trommelmotoren dieser Bauart werden für unterschiedliche Zwecke in logistischen Anwendungen eingesetzt, beispielsweise um in einem Gestell mittels einer Trommelmotorwelle und einer Trommelmotorachse montiert zu werden. Typischerweise ist die elektrische Antriebseinheit ausgebildet, ein Förderdrehmoment von der Trommelmotorwelle auf das Trommelrohr zu übertragen. Diese Übertragung kann über ein vom Trommelmotor umfasstes Trommelmotorgetriebe erfolgen. Die Trommelmotorachse hingegen dient typischerweise nur der Lagerung des Trommelmotors im Gestell.

Der Trommelmotor kann dazu dienen, mittels eines Riemens oder dergleichen andere Einrichtungen anzutreiben, beispielsweise eine aus mehreren Förderrollen bestehende Förderstrecke. Weiterhin kann der Trommelmotor unmittelbar als Förderglied in eine Förderstrecke eingesetzt sein und das Fördergut tragen und durch die Rotation des Trommelrohrs fördern. Eine bevorzugte Anwendung besteht darin, den Trommelmotor in einer Förderbandstrecke als Antriebselement, vorzugsweise als endseitiges Antriebselement einzusetzen und ein Förderband oder Gurt in teilweiser Umschlingung um den Trommelkörper zu führen und dieses durch die Rotation des Trommelkörpers in Bewegung zu versetzen.

Trommelmotoren zeichnen sich bauartbedingt durch die spezifische Problematik einer schwierigen Wärmeabfuhr der Verlustwärme der elektrischen Antriebseinrichtung aus, die für die kompakte Bauform des Trommelmotors vorzugsweise innerhalb des Trommelrohrs angeordnet ist. Bei einigen Trommelmotoren hoher Leistungsklassen hat sich daher eine Ölfüllung des Trommelrohrs im Stand der Technik bewährt, um die thermische Stabilität des Trommelmotors auch bei hoher Last sicher zu stellen. Ein bekannter Trommelmotor wird beispielsweise in der US 6,710,505 B1 gezeigt, der einen in eine Förderrolle integrierten bürstenlosen Wechselstrommotor umfasst.

WO 99/00317 offenbart ein Trommelmotor mit den Merkmalen des Oberbegriffs des Anspruchs 1.

Es ist Aufgabe der vorliegenden Erfindung einen Trommelmotor zu schaffen, der einen größeren Einsatzbereich bietet.

Bezüglich des Trommelmotors wird die Aufgabe durch die Merkmale des Anspruchs 1 gelöst, wobei die Winkelmesseinheit innerhalb einer fluiddichten Kapsel, vorzugsweise innerhalb einer öldichten Kapsel angeordnet ist.

Der erfindungsgemäße Trommelmotor hat den Vorteil, dass die Winkelmesseinheit, genauer gesagt die gekapselte Winkelmesseinheit, in einem Kühlfluid, welches in das Trommelrohr zwecks Kühlung der elektrischen Antriebseinheit einzubringen ist, betrieben werden kann.

Dies erlaubt einen größeren Einsatzbereich des Trommelmotors. Die Erfindung schließt diesbezüglich die Erkenntnis ein, dass Trommelmotoren des Standes der Technik, die eine Winkelmesseinheit und eine vorgegebene Länge von ca. 530 mm bei einem Durchmesser ab ca. 80 mm aufweisen, typischerweise nur in einem vergleichsweise geringen Leistungsbereich eingesetzt werden können, beispielsweise nur bis 750 Watt, wobei eine Wärmeabfuhr von der elektrischen Antriebseinheit den limitierten Faktor bezüglich der Leistung darstellt.

Dadurch, dass die Winkelmesseinheit gekapselt ist, kann diese in einem Kühlfluid, beispielsweise Öl, betrieben werden. Somit kann die im Trommelmotor vorgesehene elektrische Antriebseinheit auch mit einer höheren elektrischen Leistung betrieben werden, beispielsweise mit 1 kW (Kilowatt), und gleichzeitig eine Winkelmessung erfolgen.

In einer besonders bevorzugten Ausführungsform ist in dem Trommelrohr ein Kühlfluid, beispielsweise ein Öl, zur Kühlung der elektrischen Antriebseinheit vorgesehen. Mit anderen Worten ist der erfindungsgemäße Trommelmotor bevorzugt ein fluidgekühlter, vorzugsweise ölgekühlter Trommelmotor. Vorzugsweise ist der Trommelmotor bzw. ein freies inneres Volumen des Trommelmotors wenigstens zu 40 Prozent und höchstens zu 60 Prozent, vorzugsweise wenigstens zu 45 Prozent und höchstens zu 55 Prozent, besonders bevorzugt etwa zu 50 Prozent mit Öl gefüllt, so dass im Trommelmotor, insbesondere im Bereich der gekapselten Winkelmesseinheit, ein ÖI-Luft-Mischbetrieb realisiert wird, wenn der Trommelmotor in seiner bestimmungsgemäßen Einbaulage befindlich ist, d.h. insbesondere wenn die Längsachse des Trommelmotors im Wesentlichen horizontal verläuft.

In einer Ausführungsform der Erfindung ist die Winkelmesseinheit als kapazitiver Drehgeber ausgebildet. Dies ermöglicht eine besonders sichere Erfassung des Drehwinkels, insbesondere der typischerweise auch vom Drehgeber ausgegebenen analogen Signale, wenn die fluiddichte Kapsel von einem Öl-Luft-Gemisch umgeben ist. Diesbezüglich wurde erkannt, dass bei einem bevorzugten Öl-Luft-Mischbetrieb des Trommelmotors und fluiddicht gekapseltem kapazitivem Drehgeber, dessen Drehgeberachse vorzugsweise frei von einer Zusatzlagerung ist, sowohl eine mechanische Dauerleistung des Trommelmotors von ca. 1000 Watt als auch eine Kompatibilität zu einer Vielzahl im Markt befindlichen und in typischen Förderanlagen verbauten Trommelmotor-Feedbacksystemen gegeben ist. Diesbezüglich wurde ebenfalls erkannt, dass moderne Förderbandstrecken eine Gurtbreite von größer als 600 mm aufweisen, die allerdings gleichzeitig von kompakten Trommelmotoren zu betrieben sind. Dies ist durch den erfindungsgemäß bereitgestellten Trommelmotor gewährleistet.

In einer anderen Ausführungsform der Erfindung ist die Winkelmesseinheit als induktiver Drehgeber ausgebildet sein. In einer weiteren alternativen Ausführungsform kann die Winkelmesseinheit als optischer Drehgeber ausgebildet sein. Vorzugsweise ist der Trommelmotor frei von einem optischen Drehgeber. Es wurde bezüglich aller alternativen Ausführungsformen der Winkelmesseinheit erkannt, dass eine Verbesserung der mechanischen Dauerleistung des Trommelmotors durch die erfindungsgemäße Kapselung der Winkelmesseinheit erreicht wird.

Der Trommelmotor kann genau einen Drehgeber aufweisen. Der Drehgeber kann ein Singleturn-Drehgeber sein. Vorzugsweise ist der Drehgeber ein Absolutwertgeber. Vorzugsweise ist der Drehgeber ausgebildet für eine asynchrone Datenübertragung.

Erfindungsgemäß ist der Drehgeber eigengelagert. Dies ermöglicht einen besonders robusten Betrieb des Drehgebers bzw. eine einfache Ankopplung an die Rotorwelle der elektrischen Antriebseinheit. Erfindungsgemäß weist der Drehgeber eine Drehgeberachse auf, die koaxial zur Rotorwelle angeordnet ist. Es hat sich als vorteilhaft herausgestellt, wenn die Drehgeberachse und die Rotorwelle über eine Adapterbuchse verbunden sind. Vorzugsweise verläuft die Adapterbuchse axial durch den Abdichtflansch. Alternativ können die Drehgeberachse und die Rotorwelle unmittelbar miteinander verbunden sein, beispielsweise mittels einer formschlüssigen oder reibschlüssigen Paarung. In einer besonders bevorzugten Ausführungsform, zur Vermeidung zusätzlicher Verlustwärme, ist die Drehgeberachse frei von einer Zusatzlagerung, beispielsweise in Form eines Kugellagers. Alternativ kann die Drehgeberachse in einer Zusatzlagerung, beispielsweise in einem Kugellager, insbesondere Rillenkugellager, gelagert sein.

Die Adapterbuchse und/oder die Rotorwelle kann mittels eines Wellendichtrings zum Abdichtflansch abgedichtet sein. Vorzugsweise ist der Wellendichtring ein Radial-Wellendichtring gemäß DIN 3760 mit zusätzlicher Dichtlippe. Vorzugsweise besteht der Wellendichtring aus Nitril-Butadien-Kautschuk (NBR).

Erfindungsgemäß weist die Kapsel einen Abdichtflansch und eine Abdeckhaube auf. Die Abdeckhaube umschließt den Abdichtflansch zumindest abschnittsweise. Der Abdichtflansch ist vorzugsweise zwischen der Winkelmesseinheit und der elektrischen Antriebseinheit angeordnet. In einer besonders bevorzugten Ausführungsform weist die Abdeckhaube einen Haubenmantel und ein Haubenende auf. Vorzugsweise ist die Abdeckhaube zweiteilig durch den Haubenmantel und das Haubenende gebildet. Alternativ kann die Abdeckhaube einteilig ausgebildet sein. Bevorzugt ist eine Anschlussleitung zur Winkelmesseinheit durch das Haubenende geführt, wobei die Anschlussleitung vorzugsweise in das Haubenende eingepresst, wenigsten aber zu diesem abgedichtet ist. Die Anschlussleitung kann durch eine Leitungsdichtung zum Haubenende abgedichtet sein.

Besonders bevorzugt ist die Anschlussleitung der Winkelmesseinheit auf einer dem Abdichtflansch abgewandten Seite der Winkelmesseinheit aus der Abdeckhaube herausgeführt. Alternativ kann die Anschlussleitung der Winkelmesseinheit auf einer dem Abdichtflansch zugewandten Seite der Winkelmesseinheit aus der fluiddichten Kapsel herausgeführt sein, wobei die Anschlussleitung bevorzugt durch den Abdichtflansch und/oder den Kartuschenflansch hindurch geführt ist. Weiter bevorzugt ist die Anschlussleitung zum Abdichtflansch abgedichtet. Die Anschlussleitung kann durch eine Leitungsdichtung zum Abdichtflansch abgedichtet sein. In einer weiteren bevorzugten Ausführungsform ist der Haubenmantel zum Abdichtflansch über einen Flanschdichtring abgedichtet. Der Haubenmantel kann zum Haubenende durch einen Enddichtring abgedichtet sein. Der Flanschdichtring und/oder der Enddichtring können jeweils als O-Ring bereitgestellt sein.

In einer besonders bevorzugten Ausführungsform weist der Trommelmotor eine Sensorkartusche auf. Die Sensorkartusche kann axial im Trommelrohr angeordnet sein. Bevorzugt ist die fluiddichte Kapsel innerhalb der Sensorkartusche angeordnet. Es hat sich als vorteilhaft herausgestellt, wenn die Sensorkartusche wenigstens eine Fluidöffnung aufweist, durch die ein Kühlungsfluid, beispielsweise Öl, hindurch strömen kann.

In einer besonders bevorzugten Ausführungsform weist die Sensorkartusche einen Kartuschenflansch auf. Vorzugsweise ist die Sensorkartusche über Kartuschenflansch drehfest mit dem Stator verbunden. Es hat sich als vorteilhaft herausgestellt, wenn die Sensorkartusche einen Zwischenrohrflansch aufweist. Über den Zwischenrohrflansch kann die Sensorkartusche an ein Zwischenrohr des Trommelmotors angeflanscht sein. Über das Zwischenrohr wird vorzugsweise ein Fördermoment von der elektrischen Antriebseinheit auf die Trommelmotorwelle übertragen.

In einer besonders bevorzugten Ausführungsform sind der Kartuschenflansch und der Zwischenrohrflansch über wenigstens einen Zuganker und/oder über wenigstens eine Schraube miteinander verspannt. Vorzugsweise ist der Zuganker oder die Schraube über eine Durchgangsbohrung durch den Zwischenrohrflansch geführt und/oder gegen den Zwischenrohrflansch abgestützt. Der Zuganker oder die Schraube kann in den Kartuschenflansch, vorzugsweise nur in den Kartuschenflansch eingeschraubt sein. Alternativ kann der Zuganker oder die Schraube über eine Flanschbohrung durch den Kartuschenflansch geführt sein. In diesem Fall ist der Zuganker oder die Schraube vorzugsweise mit einem der elektrischen Antriebseinheit nachgelagerten Getriebeflansch oder dergleichen verschraubt. Vorteilhafterweise verläuft der Zuganker oder die Schraube in diesem Fall durch die elektrische Antriebseinheit hindurch.

Es hat sich als vorteilhaft herausgestellt, wenn sechs Zuganker oder Schrauben, insbesondere genau sechs Zuganker oder Schrauben vorgesehen sind. Die Zuganker oder Schrauben können, vorzugsweise gleichmäßig voneinander beanstandet, entlang eines Umfangs des Zwischenrohrflansch angeordnet sein.

Es hat sich als vorteilhaft herausgestellt, wenn der Kartuschenflansch und Abdichtflansch miteinander verschraubt sind. Dies begünstigt eine dauerhafte Dichtigkeit der fluiddichten Kapsel.

In einer besonders bevorzugten Ausführungsform ist die elektrische Antriebseinheit ausgebildet, dass sie dauerhaft mit einer mechanischen Leistung von größer 400 Watt, vorzugsweise größer 900 W betrieben werden kann bzw. zu Betreiben ist. Die Rotorwelle ist weiter vorzugsweise innerhalb des Stators angeordnet. Der Stator weist vorzugsweise Spulenwicklungen auf. An der Rotorwelle sind bei den vorzugsweise eingesetzten Synchronmotoren Permanentmagnete angeordnet. Vorzugsweise ist die elektrische Antriebseinheit ausschließlich als Synchronmotor ausgebildet.

Das Trommelrohr ist vorzugsweise hohlzylinderförmig ausgebildet und besteht aus einem Material, welches ein individuelles Zuschneiden des Trommelrohrs auf eine gewünschte Länge ermöglicht und gleichzeitig eine ausreichende Festigkeit für die Anwendung der Fördereinrichtung in Förderanlagen aufweist. Ein solches Material kann bevorzugt aus Stahl, Aluminium und/oder Kunststoff (z.B. PVC: Polyvinylchlorid) bestehen oder aufweisen. Eine Innenfläche des Trommelrohrs ist vorzugsweise zylinderförmig ausgebildet.

Weiter wird eine Sensorkartusche mit einer Winkelmesseinheit zum Erfassen eines Drehwinkels zwischen einem Stator und einer Rotorwelle einer elektrischen Antriebseinheit eines Trommelmotors beschrieben, wobei die Winkelmesseinheit innerhalb einer fluiddichten Kapsel angeordnet ist.

Gleichermaßen ergibt sich der Vorteil, dass die Winkelmesseinheit in einem Kühlungsfluid, welches in ein Trommelrohr des Trommelmotors zwecks Kühlung der elektrischen Antriebseinheit einzubringen ist, betrieben werden kann.

Die Sensorkartusche kann durch die mit Bezug auf den erfindungsgemäßen Trommelmotor bzw. dessen Sensorkartusche beschriebenen Merkmale in entsprechender Weise weitergebildet sein. Die Sensorkartusche weist vorzugsweise wenigstens eine, vorzugsweise standarisierte, Schnittstelle zur Kopplung mit einem oder mehreren anderen Trommelmotormodulen auf. Vorzugsweise ist diese Schnittstelle als Kartuschenflansch ausgebildet.

In einer besonders bevorzugten Ausführungsform ist die Winkelmesseinheit der Sensorkartusche als kapazitiver oder induktiver Drehgeber ausgebildet. Vorzugsweise ist die Sensorkartusche frei von einem optischen Drehgeber. Vorzugsweise weist die Sensorkartusche genau einen Drehgeber auf.

Bevorzugte Ausführungsformen der Erfindung werden beispielhaft anhand der beiliegenden Figuren beschrieben, wobei gleiche Merkmale mit gleichen Bezugszeichen bezeichnet sind. Es zeigen:
- Fig. 1:: eine seitliche Querschnittsansicht eines ersten Ausführungsbeispiels eines erfindungsgemäßen Trommelmotors;
- Fig. 2:: eine perspektivische Ansicht des in Fig. 1 gezeigten Trommelmotors;
- Fig. 3:: eine seitliche Außenansicht eines Ausführungsbeispiels einer Sensorkartusche angeflanscht an einer elektrischen Antriebseinheit;
- Fig. 4:: eine seitliche Querschnittsansicht der in Fig. 3 gezeigten Anordnung;
- Fig. 5:: eine Draufsicht auf die in Fig. 3 gezeigte Sensorkartusche;
- Fig. 6:: eine perspektivische Teilansicht der in Fig. 3 gezeigten Sensorkartusche;
- Fig. 7:: eine weitere Querschnittsansicht der in Fig. 3 gezeigten Sensorkartusche;
- Fig. 8:: einen Ausschnitt einer seitlichen Querschnittsansicht eines zweiten Ausführungsbeispiels eines erfindungsgemäßen Trommelmotors; und
- Fig. 9:: eine perspektivische Teilansicht des zweiten Ausführungsbeispiels eines erfindungsgemäßen Trommelmotors der Fig. 8.

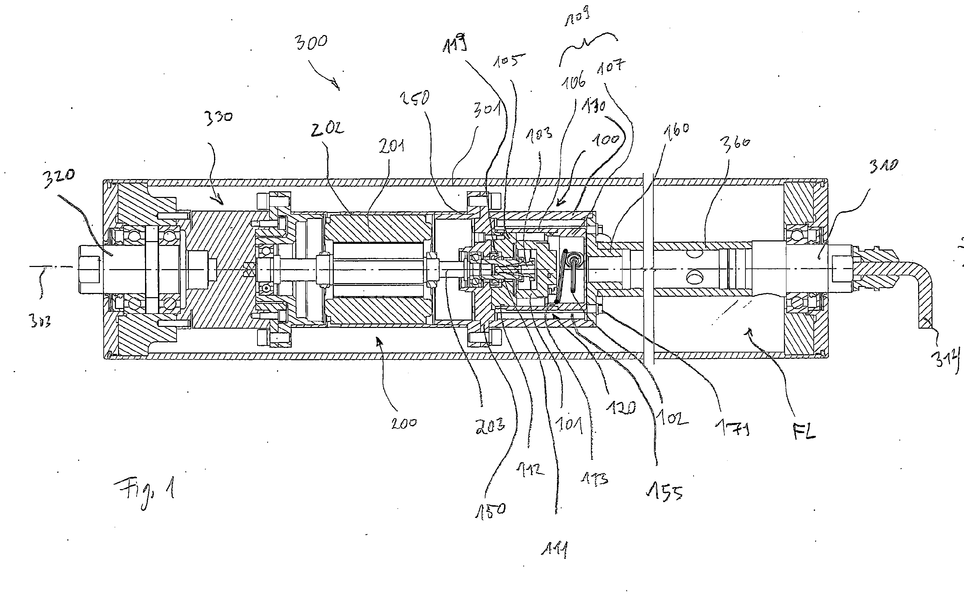

Eine seitliche Querschnittsansicht eines Ausführungsbeispiels eines erfindungsgemäßen Trommelmotors 300 ist in Fig. 1 dargestellt. Der Trommelmotor 300 weist ein Trommelrohr 301 auf, das sich entlang einer Längsachse 303 erstreckt. Das Trommelrohr 301 ist zylinderförmig ausgebildet. Innerhalb des Trommelrohrs 301 ist eine elektrische Antriebseinheit 200 angeordnet. Die elektrische Antriebseinheit 200 weist einen Stator 201 und einer Rotorwelle 203 auf, wobei die Rotorwelle 203 im vorliegend dargestellten Ausführungsbeispiel durch den Stator 201 hindurch verläuft und koaxial zu diesem angeordnet ist.

Der Trommelmotor 300 weist eine Trommelmotorwelle 310 und eine Trommelmotorachse 320 auf über die der Trommelmotor 300 im Gestell einer nicht zeigten Förderanlage gelagert ist. Dabei ist die elektrische Antriebseinheit 200 ausgebildet, ein Förderdrehmoment von der Trommelmotorwelle 310 auf das Trommelrohr 301 zu übertragen. Diese Übertragung erfolgt über einen vom Trommelmotor 300 umfasstes Trommelmotorgetriebe 330, das beispielsweise ein Planetengetriebe sein kann. Die Trommelmotorachse 320 dient im vorliegend dargestellten Ausführungsbeispiel lediglich der Lagerung und ist nicht für die Übertragung des Förderdrehmoments vorgesehen.

Der Trommelmotor 300 weist ferner eine Winkelmesseinheit 101 auf, die zum Erfassen eines Drehwinkels zwischen dem Stator 201 und der Rotorwelle 203 angeordnet ist. Erfindungsgemäß ist die Winkelmesseinheit 101 innerhalb einer fluiddichten, d.h. vorliegend öldichten Kapsel 120 angeordnet. Vorteilhafterweise kann die Winkelmesseinheit 101 in einem Kühlfluid FL, dass vorliegend ein Öl und zur Kühlung der elektrischen Antriebseinheit 200 in dem Trommelrohr 301 vorgesehen ist, betrieben werden.

In Fig. 1 ist der Trommelmotor 300 bzw. ein freies inneres Volumen des Trommelmotors etwa zu 50 Prozent mit einem als Öl bereitgestellten Kühlfluid gefüllt, so dass im Bereich der in der fluiddichten Kapsel 120, die die Winkelmesseinheit 101 umfasst, ein Öl-Luft-Mischbetrieb realisiert wird. Fig. 1 zeigt den Trommelmotor 300 in seiner bestimmungsgemäßen horizontalen Einbaulage, d.h. Längsachse 303 des Trommelmotors 300 verläuft im Wesentlichen horizontal, Somit ist also die untere Hälfte des Trommelrohrs 301 bis hoch zur Längsachse 303 mit Öl gefüllt,

Im vorliegend dargestellten Ausführungsbeispiel ist die Winkelmesseinheit 101 als kapazitiver Drehgeber ausgebildet. Die als kapazitiver Drehgeber ausgebildete Winkelmesseinheit 101 ist vorliegend eigengelagert unter weist eine Drehgeberachse 103 auf. Die Drehgeberachse 103 ist koaxial zur Rotorwelle 203 angeordnet. Die Drehgeberachse 303 ist frei von einer Zusatzlagerung, beispielsweise in Form eines Kugellagers.

Wie der Fig. 1 entnommen werden kann, ist die fluiddichte Kapsel 120, in der die Winkelmesseinheit 101 eingehaust ist, durch einen Abdichtflansch 105 und eine Abdeckhaube 109 gebildet. Der Abdichtflansch 105 und die Abdeckhaube 109 sind koaxial zueinander angeordnet. Die Abdeckhaube 109 umschließt den Abdichtflansch 105 abschnittsweise zwecks Abdichtung des Abdichtflanschs 105. Dabei ist die Abdeckhaube 109 vorliegend zweiteilig aufgebaut. Die Abdeckhaube 109 weist einen Haubenmantel 106 und ein Haubenende 107 auf. Eine Anschlussleitung 102 zur Winkelmesseinheit 101 ist im vorliegend dargestellten Ausführungsbeispiel durch das Haubenende 107 geführt und dort fluiddicht abgedichtet.

Wie ebenfalls der Fig. 1 entnommen werden kann, ist die Drehgeberachse 103 mit der Rotorwelle 203 über eine Adapterbuchse 111 verbunden. Dabei verläuft die Adapterbuchse 111 axial durch den Abdichtflansch 105 hindurch. Die Adapterbuchse 111 ist mittels eines Wellendichtrings 119 zum Abdichtflansch 105 abgedichtet.

Der Haubenmantel 106 ist zum Abdichtflansch 105 über einen Flanschdichtring 112 abgedichtet. Des Weiteren ist der Haubenmantel 106 zum Haubenende 107 durch einen Enddichtring 113 abgedichtet.

Der Trommelmotor 300 der Fig. 1 weist ebenfalls eine Sensorkartusche 100 auf, die koaxial im Trommelrohr 301 angeordnet ist. Die Sensorkartusche 100 ist dabei eine standardisierte Modulkomponente, die zur Kopplung mit einem Trommelmotormodul, beispielsweise der in Fig. 1 gezeigten elektrischen Antriebseinheit 200, vorgesehen ist. Die fluiddichte Kapsel 120, die die Winkelmesseinheit 101 einschließt, ist ihrerseits innerhalb der Sensorkartusche 100 angeordnet.

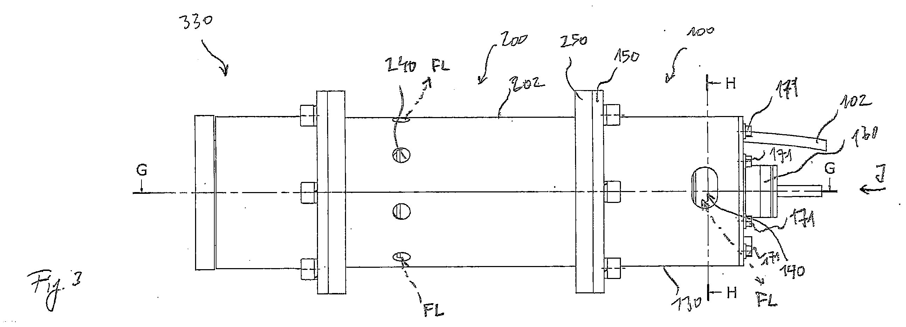

Die Sensorkartusche 100 weist ein Kartuschengehäuse 130 auf (vgl. auch Fig. 3) in dem eine fluiddichte Öffnung 140 vorgesehen ist, durch die ein Kühlungsfluid FL in die Sensorkartusche 101 strömen kann. Mit anderen Worten kann ein Kühlungsfluid FL, beispielsweise ein Öl, in den Zwischenraum 155 zwischen dem zylinderförmig ausgebildeten Kartuschengehäuse 130 und der fluiddichten Kapsel 120 eintreten ohne allerdings mit der innerhalb der fluiddichten Kapsel 120 angeordneten Winkelmesseinheit 101 in Kontakt zu kommen.

Das Kartuschengehäuse 130 weist ebenfalls eine Anschlussöffnung 141 auf, über die die Anschlussleitung 102 für die Winkelmesseinheit 101 in die Sensorkartusche 100 eingeführt ist. Dabei kann ein Kühlungsfluid FL auch durch diese Anschlussöffnung 141 in den Zwischenraum 155 zwischen dem zylinderförmig ausgebildeten Kartuschengehäuse 130 und der fluiddichten Kapsel 120 gelangen. Alternativ und hier nicht gezeigt, kann die Anschlussleitung 102 durch den Zwischenrohrflansch 160 durchgeführt sein.

Die Sensorkartusche 100 weist einen Kartuschenflansch 150 auf. Über den Kartuschenflansch 150 ist die Sensorkartusche 100 an einen drehfest mit dem Stator 201 verbundenen Motorflansch 250 angeflanscht. Der Kartuschenflansch 150 kann im Sinne einer standardisierten Schnittstelle mit vorzugsweise definierten ab Maßen ausgebildet sein, so dass die Sensorkartusche 100 an verschiedene elektrische Antriebseinheit angeschlossen werden kann. Alternativ und hier nicht gezeigt, können der Kartuschenflansch 150 und der Motorflansch 250 als gemeinsames Bauteil, vorzugsweise einteilig ausgebildet sein.

Die Sensorkartusche 100 weist ebenfalls einen Zwischenrohrflansch 160 auf. Über den Zwischenrohrflansch 160 ist die Sensorkartusche 100 an einen Zwischenrohr 360 des Trommelmotors 300 angeflanscht. Das Zwischenrohr 360 ist seinerseits mit der Trommelmotorwelle 310, die in einem Kugellager gelagert ist, verbunden. Über das Zwischenrohr 360 wird das Förderdrehmoment, dass durch die elektrische Antriebseinheit 200 bereit gestellt wird, auf die Trommelmotorwelle 310 übertragen.

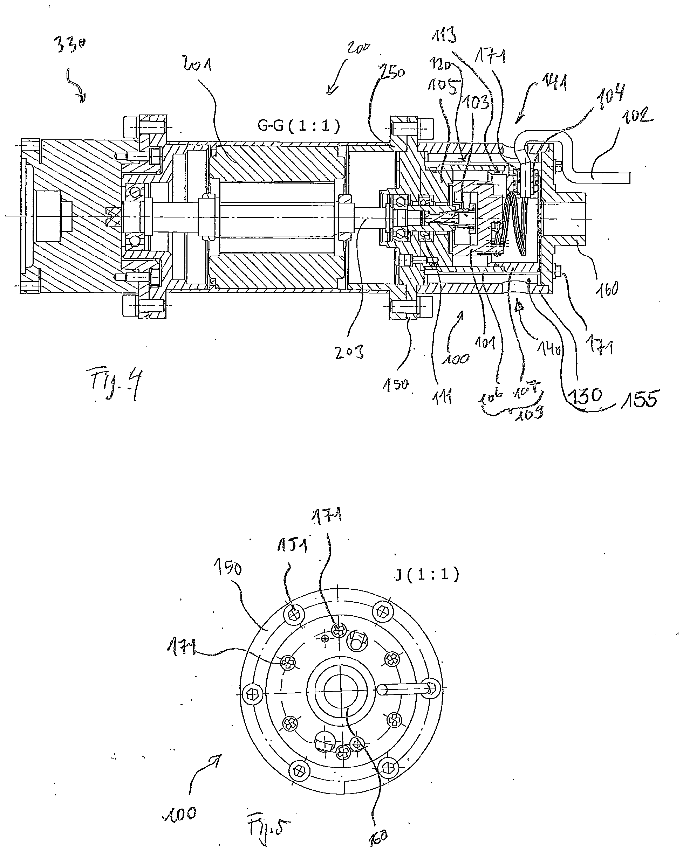

Wie weiterhin der Fig. 1 entnommen werden kann, sind der Kartuschenflansch 150 und der Zwischenrohrflansch 160 über einen Zuganker 171 gegeneinander verspannt. Vorzugsweise sind genau sechs Zuganker 171 vorgesehen (vgl. Fig. 5), die gleichmäßig voneinander beanstandet entlang des Umfangs des Zwischenrohrflansch 160 angeordnet sind. Über den oder die Zuganker 171 kann eine dauerhafte Abdichtung der fluiddichten Kapsel 120 gewährleistet werden. Der Kartuschenflansch 150 und der Abdichtflansch 105 sind miteinander verschraubt.

Eine Versorgungsleitung 314 dient der elektrischen Versorgung der elektrischen Antriebseinheit 200. Die über die Anschlussleitung 102 der Winkelmesseinheit 101 zu führenden Sensorsignale können beispielsweise über die Versorgungsleitung 314 geführt sein bzw. über den gleichen Anschluss über den die Versorgungsleitung 314 in das Innere des Trommelmotors 300 gelangt. Vorzugsweise, zur weitestgehenden Vermeidung von elektromagnetischen Unverträglichkeiten, werden die Anschlussleitung 102 und Versorgungsleitung 314 getrennt voneinander geführt sein.

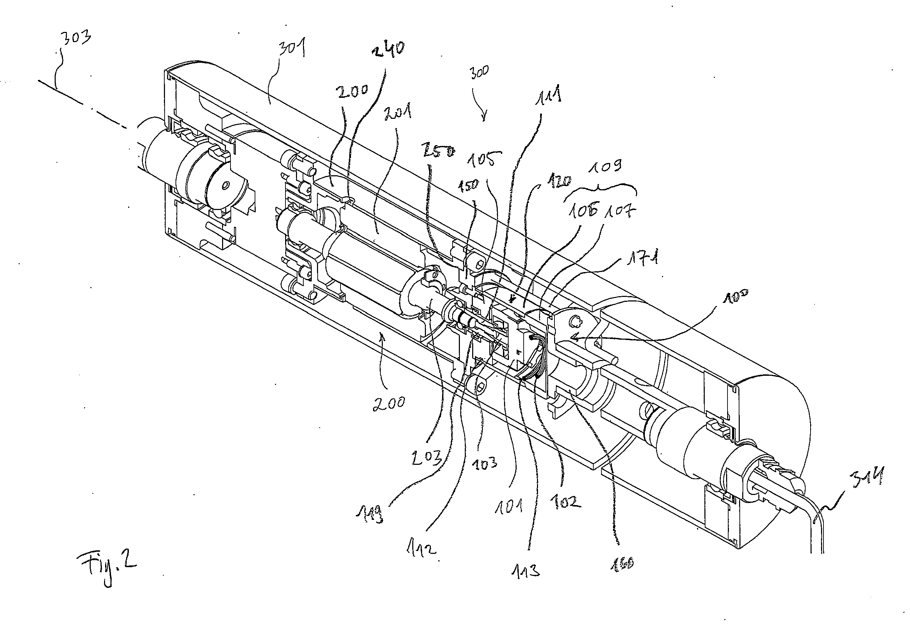

Fig. 2 zeigt eine perspektivische Ansicht des in Fig. 1 gezeigten Trommelmotors 300, wobei gleiche Merkmale mit gleichen Bezugszeichen versehen wurden. Aus Darstellungsgründen ist das Kartuschengehäuse 130 der Sensorkartusche 100 (vgl. Fig. 1) nicht dargestellt.

Fig. 3 zeigt eine seitliche Außenansicht eines Ausführungsbeispiels einer Sensorkartusche 100, die beispielhaft an eine elektrische Antriebseinheit 200 angeflanscht ist. Die elektrische Antriebseinheit 200 ist ihrerseits an einen Trommelmotorgetriebe 330 angeflanscht. Alternativ und hier nicht gezeigt, können die elektrische Antriebseinheit 200 und das Trommelmotorgetriebe 330 in Serie zueinander gepresst sein. Die Sensorkartusche 100 umfasst eine Winkelmesseinheit 101 zum Erfassen eines Drehwinkels zwischen einem Stator 201 und einer Rotorwelle 203 einer elektrischen Antriebseinheit 200 eines Trommelmotors 300. Die Winkelmesseinheit 101 ist innerhalb einer fluiddichten Kapsel 120 angeordnet. Somit kann die Winkelmesseinheit 101 in einem Kühlungsfluid (vgl. Fig. 1), welches in ein Trommelrohr 301 des Trommelmotors 300 zwecks Kühlung der elektrischen Antriebseinheit 200 eingebracht ist, betrieben kann.

Gut zu erkennen in Fig. 3 ist die Fluidöffnung 140, über die ein Kühlungsfluid FL in die Sensorkartusche 100 eintreten und aus der Sensorkartusche 100 austreten kann. Gleichsam für den Durchtritt des Kühlungsfluid FL ausgebildet sind Statorfluidöffnungen 240, die am Umfang der elektrischen Antriebseinheit 200, genauer gesagt am Statorgehäuse 202, ausgebildet sind.

Die Sensorkartusche 100 weist einen Kartuschenflansch 150 auf, über den die Sensorkartusche 100 an einen Motorflansch 250 der elektrischen Antriebseinheit 200 angeflanscht ist. Alternativ und hier nicht gezeigt, kann die Sensorkartusche 100 über den Kartuschenflansch an den Motorflansch angepresst sein. Rechts in Fig. 3 zu sehen sind vier der Zuganker 171, über die der Kartuschenflansch 150 und der Zwischenrohrflansch 160 miteinander verspannt sind. Die Sensorkartusche 100 weist eine Schnittstelle zur Kopplung mit einem oder mehreren anderen Trommelmotormodulen aufweist. Diese Schnittstelle ist vorliegend durch den Kartuschenflansch 150 gebildet.

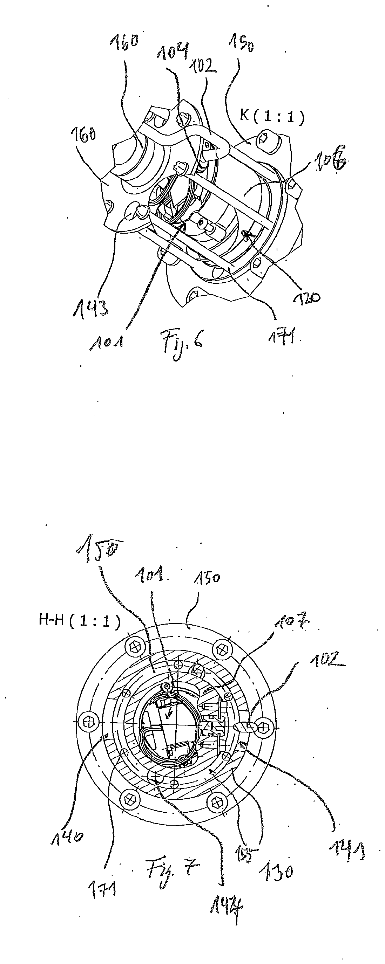

Des Weiteren sind in Fig. 3 die Schnittlinien G und H eingezeichnet, wobei der Schnitt G-G in Fig. 4 und der Schnitt H-H in Fig. 7 gezeigt ist. Eine seitliche Draufsicht entsprechend der Blickrichtung J ist in Fig. 5 dargestellt.

Eine seitliche Querschnittsansicht der in Fig. 3 gezeigten Darstellung ist der Fig. 4 zu entnehmen. Die in Fig. 4 gezeigte Einheit aus Sensorkartusche 100, elektrischer Antriebseinheit 200, sowie Trommelmotorgetriebe 330 entspricht der mit Bezug auf Fig. 1 erläuterten Ausgestaltung, wobei Fig. 4 eine im Vergleich zu Fig. 1 axial verdrehte Ansicht zeigt um die Lage der Fluidöffnung 140 bzw. der Anschlussöffnung 141 besser zu verdeutlichen. Wie bereits erwähnt kann ein Kühlungsfluid FL durch die Fluidöffnung 140 und die Anschlussöffnung 141 hindurchtreten ohne mit der Winkelmesseinheit 101, die innerhalb der fluiddichten Kapsel 120 öldicht eingekapselt ist, in Kontakt zu kommen. Die die Anschlussöffnung 141 dient nicht notwendigerweise zur Durchführung der Anschlussleitung 102. Eine Durchführung der Anschlussleitung 102 kann aber im Sinne einer Montageerleichterung wünschenswert sein.

Wie der Fig. 4 entnommen werden kann, ist die Anschlussleitung 102 zur Winkelmesseinheit 101 auf einer dem Abdichtflansch 105 abgewandten Seite der Winkelmesseinheit 101 aus der fluiddichten Kapsel 120 herausgeführt, genauer gesagt aus dem Haubenende 107. Die Anschlussleitung 102 ist durch eine Leitungsdichtung 104 zum Haubenende 107 öldicht abgedichtet.

Fig. 5 zeigt nun eine Draufsicht auf die in Fig. 3 gezeigte Sensorkartusche 100 entsprechend der Blickrichtung J. Wie der Fig. 5 entnommen werden kann, ist der zylindrisch ausgebildete Kartuschenflansch 150 koaxial zu dem zylinderförmig ausgebildeten Zwischenrohrflansch 160 angeordnet. Ebenfalls ersichtlich sind sechs am Umfang des Kartuschenflansches 150 angeordnete Flanschschrauben 151 über die der Kartuschenflansch 150 mit dem Motorflansch 250 (vgl. Fig. 3) verbunden bzw. verschraubt ist. Ebenfalls erkennbar sind sechs am Umfang des Zwischenrohrflansches 160 angeordnete Zuganker 171, die jeweils gleichmäßig voneinander beanstandet sind.

Fig. 6 zeigt eine perspektivische Teilansicht der Sensorkartusche 100 der Fig. 3. Dabei ist der Haubenmantel 106, der einen Teil der Abdeckhaube 109 bildet (vgl. Fig. 4) teilweise freigestellt, um die Lage der Winkelmesseinheit 101 innerhalb der fluiddichten Kapsel 120 darzustellen. Ebenfalls aus Darstellungsgründen wurde auf eine Darstellung des Haubenendes 107 der Abdeckhaube 109 (vgl. Fig. 4) verzichtet. Über eine am Zwischenrohrflansch ausgebildete Zwischenrohrflanschöffnung 143 kann ein Kühlfluid FL ebenfalls in den Zwischenraum 155 (vgl. Fig. 7) zwischen Abdeckhaube 109 und Kartuschengehäuse 130 gelangen.

Eine weitere Querschnittsansicht der in Fig. 3 gezeigten Sensorkartusche 100 kann der Fig. 7 entnommen werden. Fig. 7 zeigt die Ansicht gemäß des Schrittes H-H. Gut zu erkennen sind die Fluidöffnung 140 sowie die diametral gegenüberliegende Anschlussöffnung 141 über die ein Kühlfluid FL in den Zwischenraum 155 zwischen Kartuschengehäuse 130 und Haubenende 107 (als Teil der Abdeckhaube 109) eintreten kann, ohne mit der ein gekapselte Winkelmesseinheit 101 in Kontakt zu kommen.

Die Darstellung der Fig. 7 zeigt, dass in einem Abschnitt des Kartuschenflansch 150, der zwischen dem Kartuschengehäuse 30 und dem Haubenende 107 erkennbar ist, eine Kartuschenflanschöffnung 144 vorgesehen ist über die ein Kühlfluid FL ebenfalls in den Zwischenraum 155 (vgl. Fig. 7) zwischen Abdeckhaube 109 und Kartuschengehäuse 130 gelangen oder aus diesem heraustreten kann. Die Kartuschenflanschöffnung 144 dient nicht notwendigerweise nur der Durchführung des Kühlfluids FL. Vielmehr kann die Kartuschenflanschöffnung 144 im Sinne einer Montageerleichterung wünschenswert und entsprechend positioniert sein.

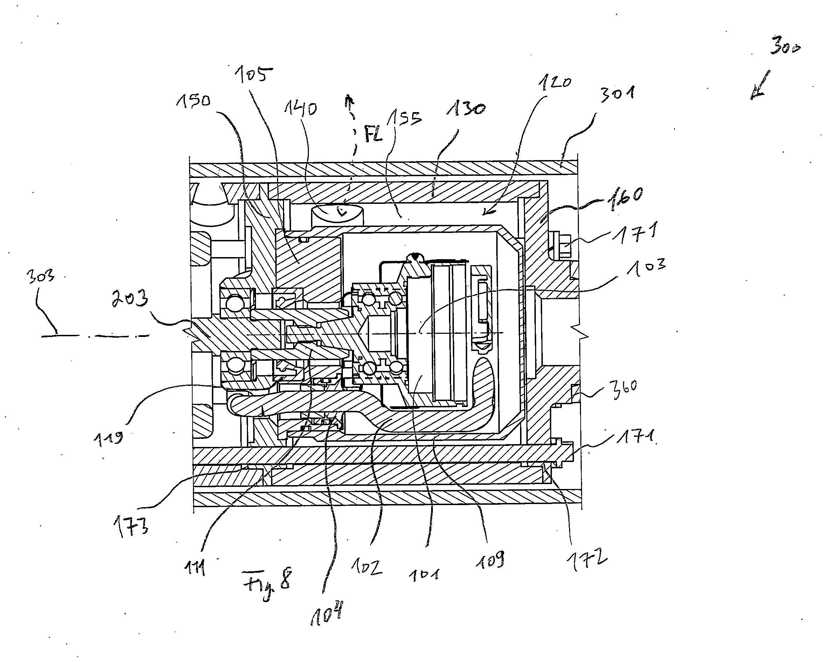

Ein Ausschnitt einer seitlichen Querschnittsansicht eines zweiten Ausführungsbeispiels eines erfindungsgemäßen Trommelmotors ist in Fig. 8 gezeigt. Im Folgenden soll im Wesentlichen auf die Unterschiede bezüglich des mit Bezug auf Fig.1 beschriebenen ersten Ausführungsbeispiels eingegangen werden.

Wie der Fig. 8 entnommen werden kann, ist die Abdeckhaube 109 einteilig ausgebildet. Die Anschlussleitung 102 zur Winkelmesseinheit 101, die als kapazitiver Drehgeber bereitgestellt sein kann, ist auf einer dem Abdichtflansch 105 zugewandten Seite der Winkelmesseinheit 101 aus der fluiddichten Kapsel 120 herausgeführt.

Wie der Fig. 8 ebenfalls entnommen werden kann, ist die Anschlussleitung 102 dabei sowohl durch den Abdichtflansch 105 als auch den Kartuschenflansch 150 hindurch geführt. Die Anschlussleitung 102 ist durch eine Leitungsdichtung 104 zum Abdichtflansch 105 öldicht abgedichtet.

Über die im oberen Teil der Fig. 8 erkennbare und im Kartuschengehäuse 130 ausgebildete Fluidöffnung 140 kann - wie auch bei den vorbeschriebenen Ausführungsbeispielen - ein Kühlfluid FL in den Zwischenraum 155 zwischen der fluiddichten Kapsel 120 und dem Kartuschengehäuse 130 gelangen bzw. aus diesem entweichen. Dabei kann das Kühlungsfluid FL durch die Fluidöffnung 140 hindurchtreten ohne mit der Winkelmesseinheit 101, die innerhalb der fluiddichten Kapsel 120 öldicht eingekapselt ist, in Kontakt zu kommen.

Die Zuganker 171 sind im vorliegend dargestellten Ausführungsbeispiel jeweils durch eine im Zwischenrohrflansch 160 ausgebildete Durchgangsbohrung 172 durch den Zwischenrohrflansch 160 geführt. Dabei sind die Zuganker 171 gegen den Zwischenrohrflansch 160 abgestützt. Der im unteren Teil der Fig. 8 durchgehend schraffiert dargestellte Zuganker 171 verläuft zudem durch eine im Kartuschenflansch 150 ausgebildete Flanschbohrung 173, so dass der Zuganker 171 im Bereich der Flanschbohrung 173 lediglich radial gelagert ist.

In dem in Fig. 8 gezeigten Ausschnitt ist nicht erkennbar, dass die Zuganker 171 im weiteren Verlauf in einen Getriebeflansch, der der elektrischen Antriebseinheit nachgelagert ist, eingeschraubt sind. Dabei verläuft der Zuganker 171 durch die elektrische Antriebseinheit hindurch. Derart wird eine mittelbare Verspannung des Kartuschenflansches 150 mit dem Zwischenrohrflansch 160 realisiert.

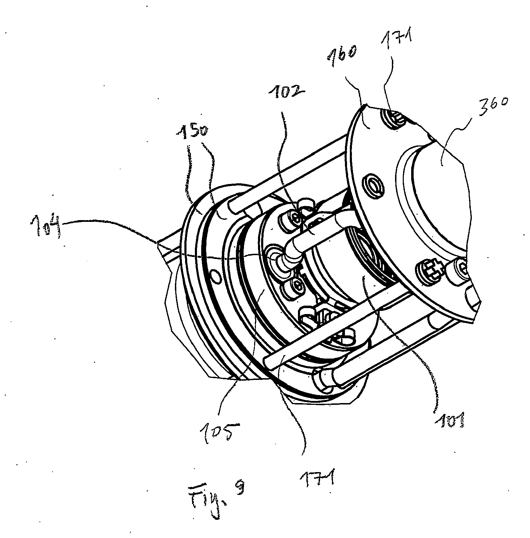

Eine perspektivische Teilansicht des zweiten Ausführungsbeispiels eines erfindungsgemäßen Trommelmotors 300 der Fig. 8 ist in Fig. 9 dargestellt. Aus Gründen der Darstellung ist die Abdeckhaube 109 (vgl. Fig. 8) nicht dargestellt. Gut in Fig. 9 zu erkennen ist, dass die Anschlussleitung 102 zur Winkelmesseinheit 101 auf einer dem Abdichtflansch 105 zugewandten Seite der Winkelmesseinheit 101 aus der fluiddichten Kapsel 120 heraus- und dabei durch den Abdichtflansch 105 hindurchgeführt ist.

### Bezugszeichenliste

- 100: Sensorkartusche
- 101: Winkelmesseinheit
- 102: Anschlussleitung
- 103: Drehgeberachse
- 104: Leitungsdichtung
- 105: Abdichtflansch
- 106: Haubenmantel
- 107: Haubenende
- 109: Abdeckhaube
- 111: Adapterbuchse
- 112: Flanschdichtring
- 113: Enddichtring
- 119: Wellendichtring
- 120: fluiddichte Kapsel
- 130: Kartuschengehäuse
- 140: Fluidöffnung
- 141: Anschlussöffnung
- 143: Zwischenrohrflanschöffnung
- 144: Kartuschenflanschöffnung
- 150: Kartuschenflansch
- 151: Flanschschrauben
- 155: Zwischenraum
- 160: Zwischenrohrflansch
- 171: Zuganker
- 172: Durchgangsbohrung
- 173: Flanschbohrung
- 200: elektrische Antriebseinheit
- 201: Stator
- 202: Statorgehäuse
- 203: Rotorwelle
- 240: Statorfluidöffnung
- 250: Motorflansch
- 300: Trommelmotor
- 301: Trommelrohr
- 303: Längsachse des Trommelmotors
- 310: Trommelmotorwelle
- 314: Versorgungsleitung
- 320: Trommelmotorachse
- 330: Trommelmotorgetriebe
- 360: Zwischenrohr
- FL: Kühlfluid

## Patentansprüche

1. Trommelmotor (300) mit
- einem Trommelrohr (301), welches sich entlang einer Längsachse (303) erstreckt,
- einer im Trommelrohr (301) angeordneten elektrischen Antriebseinheit (200) mit einem Stator (201) und einer Rotorwelle (203),
- einer Winkelmesseinheit (101), die derart im Trommelrohr (301) angeordnet ist, dass sie einen Drehwinkel zwischen dem Stator (201) und der Rotorwelle (203) erfassen kann,
wobei die Winkelmesseinheit (101) innerhalb einer Kapsel (120) angeordnet ist, wobei die Kapsel (120) einen Abdichtflansch (105) und eine Abdeckhaube (109) aufweist, wobei die Abdeckhaube (109) den Abdichtflansch (105) zumindest abschnittsweise umschließt, und
die Winkelmesseinheit (101) als kapazitiver oder induktiver Drehgeber ausgebildet ist, **dadurch gekennzeichnet, dass** die Kapsel (120) fluiddicht ausgebildet ist, und dass der Drehgeber eigengelagert ist und eine Drehgeberachse (103) aufweist, die koaxial zur Rotorwelle (203) angeordnet ist.

2. Trommelmotor (300) nach Anspruch 1, **dadurch gekennzeichnet, dass** die Drehgeberachse (103) und die Rotorwelle (203) über eine Adapterbuchse (111) verbunden sind.

3. Trommelmotor (300) nach Anspruch 2, **dadurch gekennzeichnet, dass** die Adapterbuchse (111) axial durch den Abdichtflansch (105) verläuft und mittels eines Wellendichtrings (119) zum Abdichtflansch (105) abgedichtet ist.

4. Trommelmotor (300) nach einem der vorhergehenden Ansprüche, **dadurch gekennzeichnet, dass** die Abdeckhaube (109) einen Haubenmantel (106) und ein Haubenende (107) aufweist, wobei eine Anschlussleitung (102) zur Winkelmesseinheit (101) durch das Haubenende (107) geführt ist.

5. Trommelmotor (300) nach Anspruch 4, **dadurch gekennzeichnet, dass** der Haubenmantel (106) zum Abdichtflansch (105) über einen Flanschdichtring (112) und/oder der Haubenmantel (106) zum Haubenende (107) durch einen Enddichtring (113) abgedichtet ist.

6. Trommelmotor (300) nach einem der vorangehenden Ansprüche, **gekennzeichnet durch** eine Sensorkartusche (100), die koaxial im Trommelrohr (301) angeordnet ist, wobei die fluiddichte Kapsel (120) innerhalb der Sensorkartusche (100) angeordnet ist.

7. Trommelmotor (300) nach Anspruch 6, **dadurch gekennzeichnet, dass** die Sensorkartusche (100) wenigstens eine Fluidöffnung (140) aufweist, durch die ein Kühlungsfluid hindurch strömen kann.

8. Trommelmotor (300) nach Anspruch 6 oder 7, **dadurch gekennzeichnet, dass** die Sensorkartusche (100) einen Kartuschenflansch (150) aufweist, über den die Sensorkartusche (100) an einen drehfest mit dem Stator (201) verbundenen Motorflansch (250) angeflanscht ist.

9. Trommelmotor (300) nach einem der Ansprüche 6 bis 8, **dadurch gekennzeichnet, dass** die Sensorkartusche (100) einen Zwischenrohrflansch (160) aufweist, über den die Sensorkartusche (100) an einen Zwischenrohr (360) des Trommelmotors (300) angeflanscht ist.

10. Trommelmotor (300) nach Anspruch 9, **dadurch gekennzeichnet, dass** der Kartuschenflansch (150) und der Zwischenrohrflansch (160) über wenigstens einen Zuganker (171) gegeneinander verspannt sind.

11. Trommelmotor (300) nach einem der Ansprüche 8 bis 10, **dadurch gekennzeichnet, dass** der Kartuschenflansch (150) und der Abdichtflansch (105) miteinander verschraubt sind.

## Claims

1. Drum motor (300), comprising
- a drum tube (301) which extends along a longitudinal axis (303),
- an electric drive unit (200) which is arranged in the drum tube (301) and which comprises a stator (201) and a rotor shaft (203),
- an angle measuring unit (101) which is arranged in the drum tube (301) in such a way that it can detect an angle of rotation between the stator (201) and the rotor shaft (203),
wherein the angle measuring unit (101) is arranged within a capsule (120), wherein the capsule (120) has a sealing flange (105) and a covering hood (109), wherein the covering hood (109) at least partially encloses the sealing flange (105), and the angle measuring unit (101) is configured as a capacitive or inductive rotary encoder, **characterized in that** the capsule (120) is fluid-tight, and **in that** the rotary encoder has an integral bearing and has a rotary encoder axis (103) which is arranged coaxially to the rotor shaft (203).

2. Drum motor (300) according to claim 1, **characterized in that** the rotary encoder axis (103) and the rotor shaft (203) are connected via an adapter bushing (111).

3. Drum motor (300) according to claim 2, **characterized in that** the adapter bushing (111) extends axially through the sealing flange (105) and is sealed off from the sealing flange (105) by means of a shaft sealing ring (119).

4. Drum motor (300) according to any one of the preceding claims, **characterized in that** the covering hood (109) has a hood lateral surface (106) and a hood end (107), wherein a connection line (102) to the angle measuring unit (101) is passed through the hood end (107).

5. Drum motor (300) according to claim 4, **characterized in that** the hood lateral surface (106) is sealed off from the sealing flange (105) via a flange sealing ring (112) and/or the hood lateral surface (106) is sealed off from the hood end (107) by an end sealing ring (113).

6. Drum motor (300) according to any one of the preceding claims, **characterized by** a sensor cartridge (100) which is arranged coaxially in the drum tube (301), wherein the fluid-tight capsule (120) is arranged inside the sensor cartridge (100).

7. Drum motor (300) according to claim 6, **characterized in that** the sensor cartridge (100) has at least one fluid opening (140), through which a cooling fluid can flow.

8. Drum motor (300) according to claim 6 or 7, **characterized in that** the sensor cartridge (100) has a cartridge flange (150), via which the sensor cartridge (100) is flanged onto a motor flange (250) that is connected to the stator (201) in a rotationally fixed manner.

9. Drum motor (300) according to any one of claims 6 to 8, **characterized in that** the sensor cartridge (100) has an intermediate tube flange (160), via which the sensor cartridge (100) is flanged onto an intermediate tube (360) of the drum motor (300).

10. Drum motor (300) according to claim 9, **characterized in that** the cartridge flange (150) and the intermediate tube flange (160) are clamped to one another by way of at least one tie rod (171).

11. Drum motor (300) according to any one of claims 8 to 10, **characterized in that** the cartridge flange (150) and the sealing flange (105) are screwed to one another.

## Revendications

1. Moteur à tambour (300) avec
- un tube de tambour (301) qui s'étend le long d'un axe longitudinal (303),
- une unité d'entraînement (200) électrique agencée dans le tube de tambour (301) avec un stator (201) et un arbre de rotor (203),
- une unité de mesure d'angle (101) qui est agencée dans le tube de tambour (301) de telle manière qu'elle peut détecter un angle de rotation entre le stator (201) et l'arbre de rotor (203),
dans lequel l'unité de mesure d'angle (101) est agencée à l'intérieur d'une capsule (120),
dans lequel la capsule (120) présente une bride d'étanchéité (105) et un capot de recouvrement (109), dans lequel
le capot de recouvrement (109) entoure au moins par section la bride d'étanchéité (105), et
l'unité de mesure d'angle (101) est réalisée comme capteur rotatif capacitif ou inductif,
**caractérisé en ce**
**que** la capsule (120) est étanche au fluide,
et **que** le capteur rotatif est logé par lui-même et présente un axe de capteur rotatif (103) qui est agencé coaxialement à l'arbre de rotor (203).

2. Moteur à tambour (300) selon la revendication 1, **caractérisé en ce que** l'axe de capteur rotatif (103) et l'arbre de rotor (203) sont raccordés par le biais d'une douille d'adaptateur (111).

3. Moteur à tambour (300) selon la revendication 2, **caractérisé en ce que** la douille d'adaptateur (111) s'étend axialement au travers de la bride d'étanchéité (105) et est rendue étanche au moyen d'un anneau étanche d'arbre (119) par rapport à la bride d'étanchéité (105).

4. Moteur à tambour (300) selon l'une des revendications précédentes, **caractérisé en ce que** le capot de recouvrement (109) présente une enveloppe de capot (106) et une extrémité de capot (107), dans lequel une conduite de raccordement (102) à l'unité de mesure d'angle (101) est guidée au travers de l'extrémité de capot (107).

5. Moteur à tambour (300) selon la revendication 4, **caractérisé en ce que** l'enveloppe de capot (106) est rendue étanche par rapport à la bride d'étanchéité (105) par le biais d'un anneau étanche de bride (112) et/ou l'enveloppe de capot (106) est rendue étanche par rapport à l'extrémité de capot (107) par un anneau étanche d'extrémité (113).

6. Moteur à tambour (300) selon l'une des revendications précédentes, **caractérisé par** une cartouche de capteur (100) qui est agencée coaxialement dans le tube de tambour (301), dans lequel la capsule étanche au fluide (120) est agencée à l'intérieur de la cartouche de capteur (100).

7. Moteur à tambour (300) selon la revendication 6, **caractérisé en ce que** la cartouche de capteur (100) présente au moins une ouverture de fluide (140) au travers de laquelle un fluide de refroidissement peut s'écouler.

8. Moteur à tambour (300) selon la revendication 6 ou 7, **caractérisé en ce que** la cartouche de capteur (100) présente une bride de cartouche (150) par laquelle la cartouche de capteur (100) est bridée à une bride de moteur (250) reliée sans pouvoir tourner au stator (201).

9. Moteur à tambour (300) selon l'une des revendications 6 à 8, **caractérisé en ce que** la cartouche de capteur (100) présente une bride de tube intermédiaire (160) par laquelle la cartouche de capteur (100) est bridée à un tube intermédiaire (360) du moteur à tambour (300).

10. Moteur à tambour (300) selon la revendication 9, **caractérisé en ce que** la bride de cartouche (150) et la bride de tube intermédiaire (160) sont tendues par au moins un tirant (171) l'une contre l'autre.

11. Moteur à tambour (300) selon l'une des revendications 8 à 10, **caractérisé en ce que** la bride de cartouche (150) et la bride d'étanchéité (105) sont vissées l'une à l'autre.
